# EUROPEAN PATENT SPECIFICATION

(11) **EP 3 573 892 B1**
(45) Date of publication and mention of the grant of the patent: **03.03.2021**
(21) Application number: 18704749.3
(22) Date of filing: 29.01.2018
(51) Int. Cl.: B65B 35/52, B65G 57/30

(54) **BLISTER PACKAGE STACKER**
BLISTERVERPACKUNGSSTAPLER
BLISTER PAQUET STACKER

(30) Priority: 27.01.2017 US 201762451417 P; 09.06.2017 US 201762517234 P
(43) Date of publication of application: 04.12.2019
(73) Proprietor: Remedi Technology Holdings, LLC, Towson, MD 21204 (US)
(72) Inventor: ARCHER, Bobby, O., Lebanon MO 65536 (US); DUNN, Bruce, S., Springboro OH 45066 (US); BOHLMANN, Jan, White Hall MD 21161 (US)
(74) Representative: Maiwald Patent- und Rechtsanwaltsgesellschaft mbH
(86) International application number: PCT/US2018/015773
(87) International publication number: WO 2018/140891

(56) References cited:
- EP-A1- 0 337 958
- DE-A1-102011 100 421
- JP-A- 2015 013 671
- US-A1- 2008 110 134
- US-A1- 2009 220 687
- US-A1- 2010 172 724
- US-A1- 2010 175 352

## Description

### BACKGROUND

### Field

The present invention isrelated to automated pill handling and packaging devices.

### Description of the Related Art

Hospitals, longterm care and other healthcare facilities distribute and administer pharmaceutical productsto patients in individual doses numerous times perday. Pharmaceutical products such as prescription medications, nutritional supplements and the like are often stored in bulk by pharmacies and are packaged into containersof multiple doses basedon individual prescriptions for retail or outpatient distribution. For inpatientor in-facility distribution, pharmacies also often package bulkpharmaceuticals into"unit of use" or "unit dose" packages, for example, multiple blister packs that are connected togeter in a strip that contain multiple single doses of the pharmaceutical product.

In the art, blisterpackages are known for holding medicaments for dispensing to a patient. A blister package as describedin US Pat. No. 5,954,204 is formedof a rupturable substrate, a blister layer formed ovethe rupturable substrate, and a medicament contained between the blister layer andthe rupturable substrate.The blister package can be opened and gives accessto the medicament by deforming the blister layer so that it punctures the rupturable substrate and allows the medicament to be removed there from, without applying directly a mechanical pressure on the medicament.

US Pat. No. 9,394,070 describes a system for packaging unitdosesof medication. Thissystem included a feeding assembly, a pill packaging assembly, anda pill guide. In this system, a pilltraveling through a pill guide would exit an outlet aperture oriented such that a leading edge of the pill would point toward one side of the pill package andthe trailing edge ofthe pill wouldbe inclined toward an opposite side of the pill package.

US Pat. Appl. Publ. No. 2010/0175352 describes an automated packaging apparatus utilizing a rotating assembly of elongated slats containing cavitiesto receive discrete pharmaceutical, vitamin, or food products. Quantitiesof discrete productssuch as tablets, capsules, orgels were deposited into the hopper of the apparatus. The apparatus then dispensed the discrete products into containers moving on a conveyor system such that each container receives a predeterminedquality and quantity of pharmaceutical, vitamin, or food products. The '352 apparatus inspected, counted, identified, and analyzed each product deposited into the containers and maintained electronic records describing the status of each product.

US Pat. Appl. Publ. No. 2008/0110134 describes an apparatus and method for packing pills in cavities formed in a blister web which included a plurality of downwardly directed flexible members, for example brushes, that are continuously cyclically moved to contact and knock down pills that are not properly nested in respective blistercavities.

One traditional method for distributing individual dosage units of pharmaceutical products to patients begins with the generationof a patient order by a physician for particular medications. The patient order is delivered to the pharmacy. There, the process of interpreting the patient order, pulling the specified medicationor supplements from the drug storage are as, packaging the medication or supplements, andabeling the package is routinely donemanually by pharmacy support personnel. After afinal check by the facility pharmacist, the packaged individual dosage units are ready for distribution. In large facilities, the packages containing the patient's order are forwarded toindividual nursingunits where nursing staffers distribute and administer themto the patients.

There are several disadvantages associated with the traditional method of distributing individual dosage units of pharmaceutical products. To begin with, the process is labor and cost intensive. Manyseparate labor steps are requiredto fill a single patient order. In large facilities servicing hundredsof patientseach day, the staffing requirementsto rapidly process patient orders are substantial. In addition, with so many human inputs required in the existing process, theremay also be a risk of human error.

US Pat. Appl. Publ. No. 2010/0176145 describes a dispensing system and associated methodhat provides a turnkey solution for dispensingpharmaceutical products suchas solid medications and nutritional supplements tobe taken orally in health care settings, including but notlimited to, long term care (LTC) and assisted living settings. The system utilizes modules containing arrays of storage tubes that each contain individually packaged unit dosemedications (typically a single pill). In one embodiment, the present inventions relate to an improved system and method for individually packaging unit dose medications orsingle items and then placing the packaged items into individual storage tubes usablein the systemof US Pat. Appl.Publ. No. 2010/0176145.

### SUMMARY

In one embodiment of the present invention, thereis provided a blister collation system including a blister packager and a blister package stacker. The blister packager includes a blister seal station which seals a blister package with a medicament inside. The blister package stacker is connected to the blister packager via a conveyor whichmoves and sorts individual blisterpackages. The blister package stacker has a nest inlet for reception of the blister packages from the convey or, a nest assembly for holding one of the blister packages,and a blister package collection tower for storing a stack of the blister packages. The nest assembly is configured to insert one blisterpackage at a time upward into a bottom of the blister package collection tower. The blister package stacker has a push arm which pushes the stack ofthe blister packages from the collection tower into storage tubes.

In one embodiment of the presentinvention, thereis provided a blister packagestacker for reception and stacking of blisterpackages containingmedicaments. The blister package stacker has a nest inlet for reception of the blisterpackages from the conveyor, a nest assembly for holding one of the blister packages,and a blisterpackage collectiontower for storing a stack ofthe blister packages. A blisteris insertedin the nestinlet and israised in one of the nests associated with collection tower sections by rotation of the collectiontower which drives the blister upward on a helical cam at the bottom ofthe collection tower. When the collection tower hascompleted a 360 degree rotation, the blister is now spaced above the next incoming blister at the nestinlet. The blister package stacker has a push arm which pushes the stack of the blister packages from the collectiontower into storage tubes.

In one embodiment of the presentinvention, thereis provided a control system for a blister collation system. The control system includes a non-transitory computer readable medium which, when executed by a processor, performs one or more of the following: receive a first sensor signal indicating that a blister package is loaded on a nest assembly ofa blister package stacker, transmits a first control signal to raise the nest assembly into a collection tower,receives a second sensor signal indicatingthat the collection tower is completely full and transmits a second control signato push a stack of blister packagesinto a storage tube, receives a third sensor signal indicating that a conveyor isfull of the blister packages and transmits a third control signal to stop production of the blister packages, andreceivesa fourth sensorsignal including information on the medicament in the blister packages and stores the information.

It is to be understoodthat both the foregoing general description of the invention and the following detailed description are exemplary, but are not restrictive of the inventions.

### BRIEF DESCRIPTION OF THE DRAWINGS

A more completeappreciation of the inventions and many of the attendant advantages thereofwill be readily obtained as the same becomesbetter understood by referenceto the following detailed description when considered in connection with the accompanying drawings, wherein:
Fig. 1A-1 isa schematic of a blistercollation system;
Fig. 1A-2 isa schematic depiction of a PVC unwind system of a blister packager;
Fig. 1A-3 isa schematic depiction of a dosingstation;
Fig. 1B is a schematicof a representativeblister package handled by the present invention;
Fig. 1C is a schematicof a portion of a blisterpackager including a control gate to selectively select and direct blisterpackages;
Fig. 1D is a cross sectional view of the blistepackager shownin Fig. 1C;
Fig. 2A-1 isa schematicof a conveyor supplying blister packages to a blister stacker;

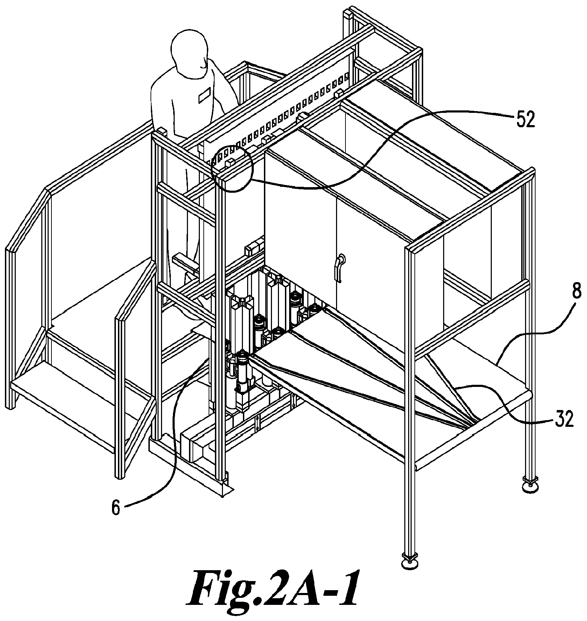

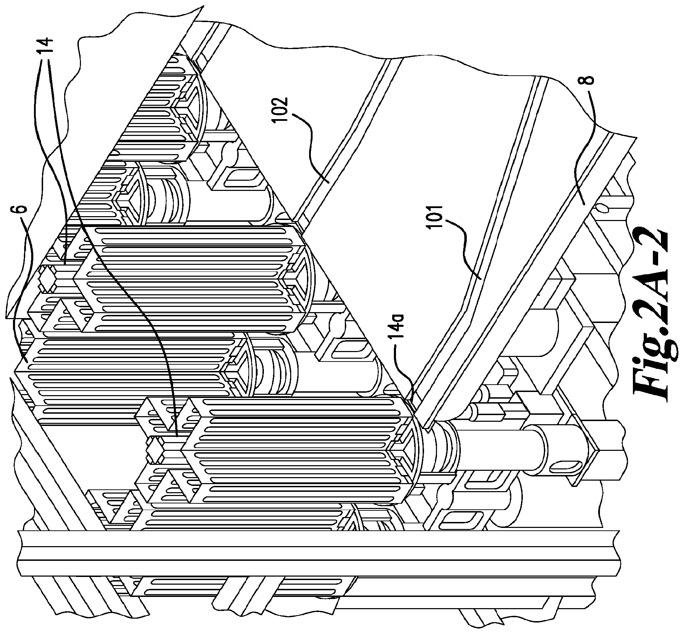

Fig. 2A-2 is an enlarged viewof a section of the conveyor ancblister stacker shownin Fig. 2A-1;

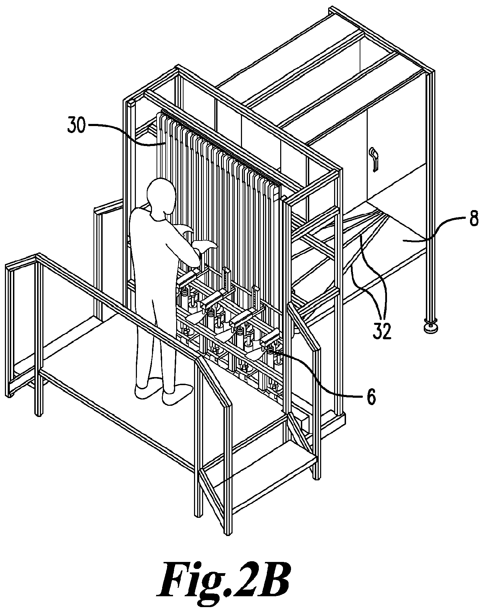

Fig. 2B is another schematic view of the conveyor and blister stacker shownin Fig. 2A-1;

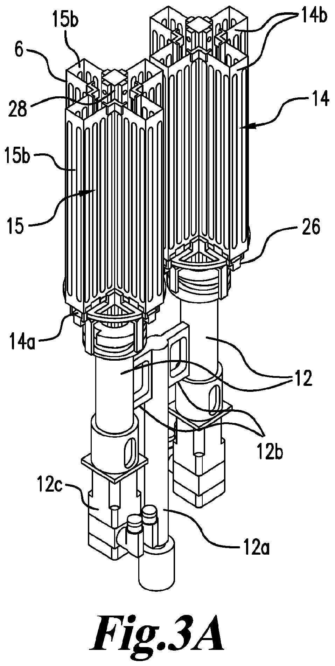

Fig. 3A is a schematic of a blister stacker according to one embodiment of the invention;

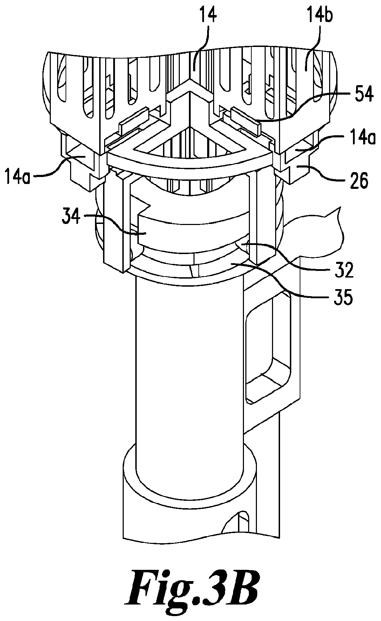

Fig. 3B is an enlarged schematic ofthe blister stacker shown in Fig.3A;

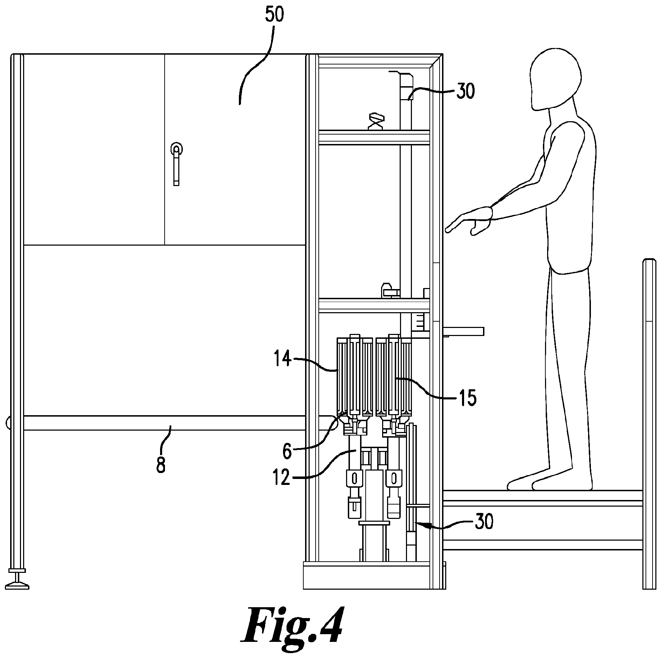

Fig. 4 is another schematic viewof the blisterstacker shownin Fig. 3A;

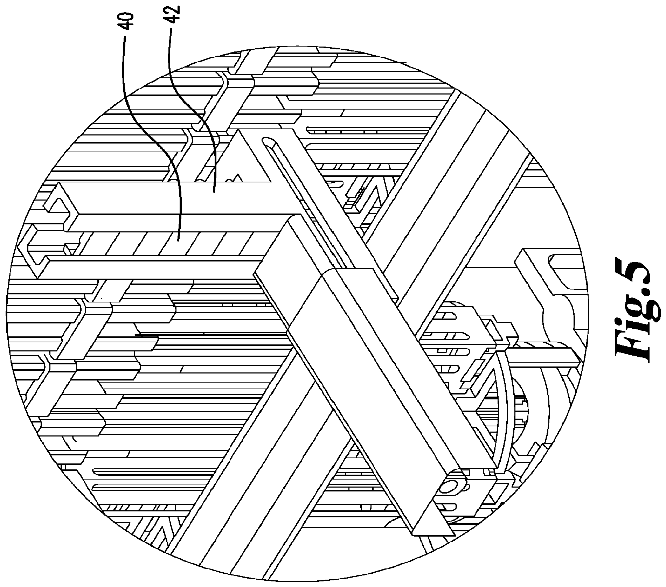

Fig. 5 is a schematic of a magazine containingclips for sealing the storagetubes onceall of the blisterpackages are stacked therein;

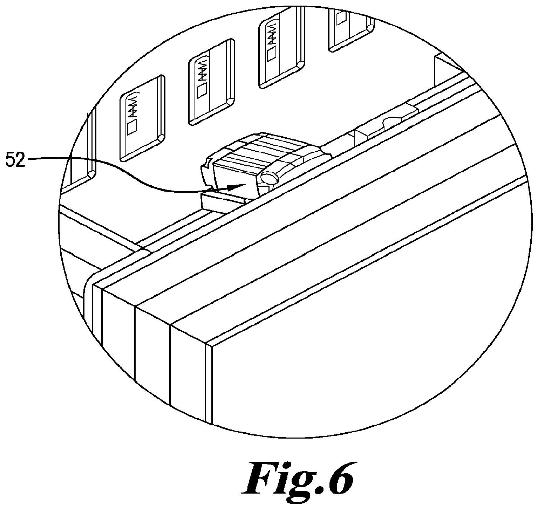

Fig. 6 is a schematic of a bar codereader implementation;

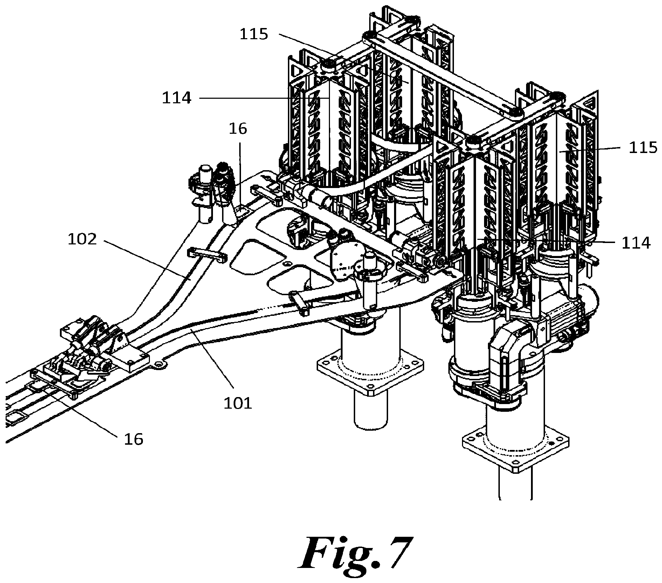

Fig. 7 is an overview ofan embodimentof a cleated convey or assembly and collation dials;

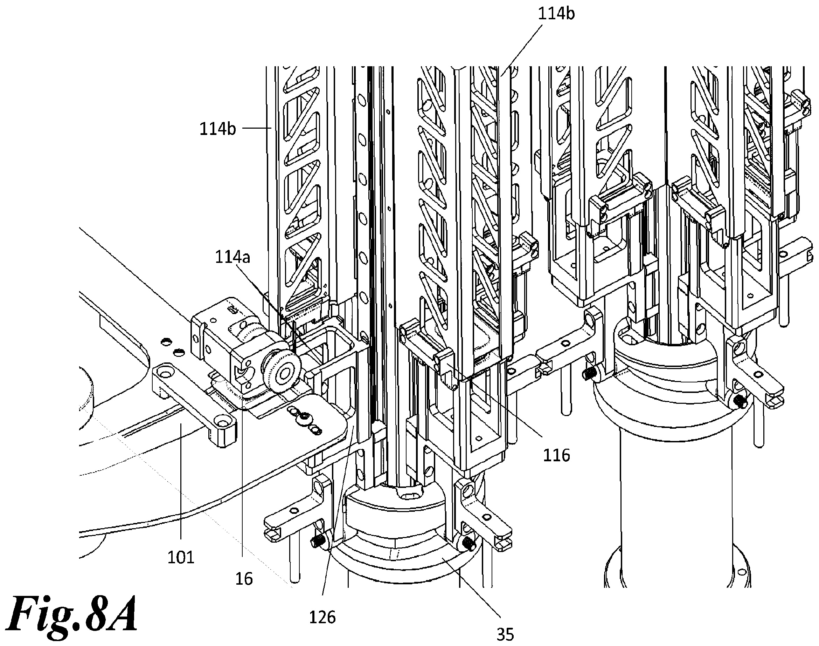

Fig. 8A isa schematic showing blisters as they are indexed along the cleated conveyor;

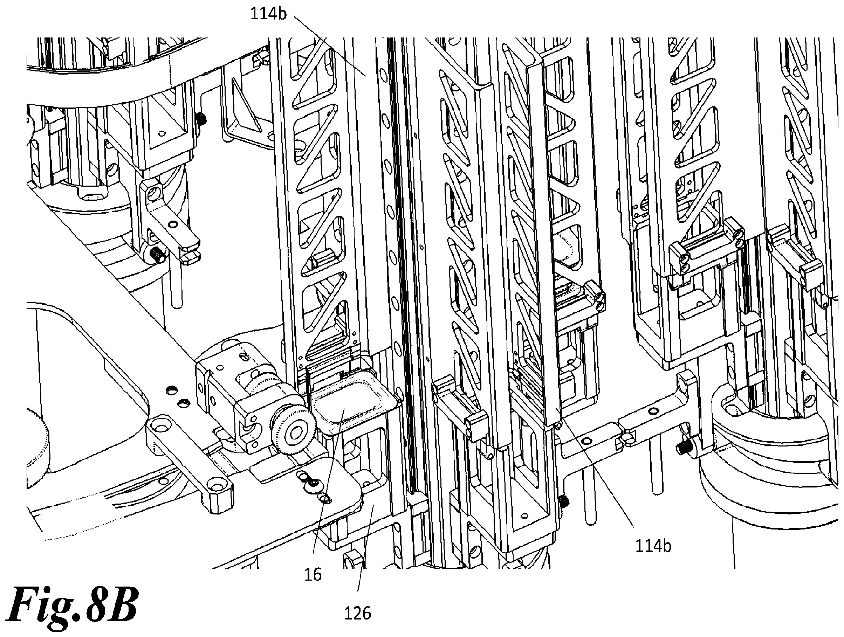

Fig. 8B is a schematic showing a blister in positionin the collation dial nest prior to indexing ofthe collation dial;

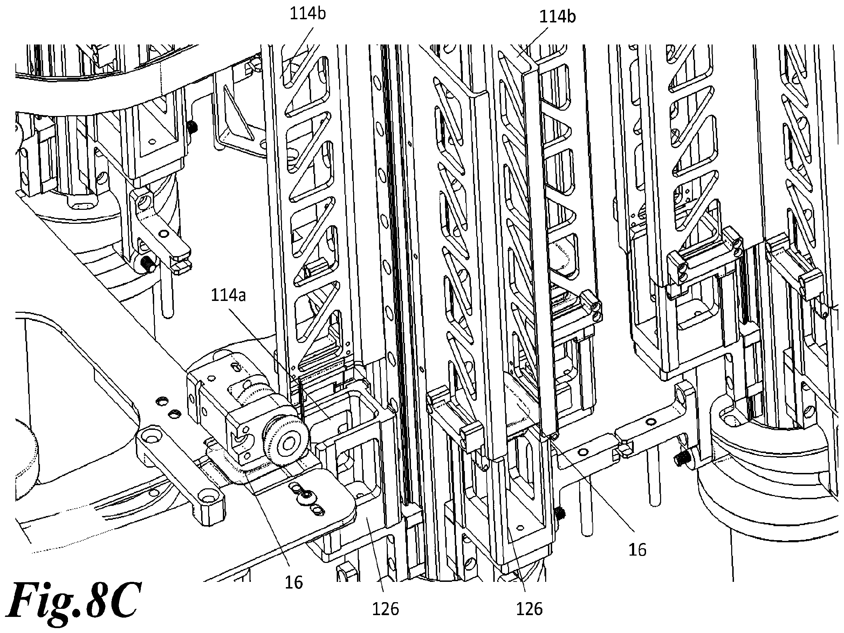

Fig. 8C is a schematic showing a blisterin a nest after it has been indexed90° in the collation dial;

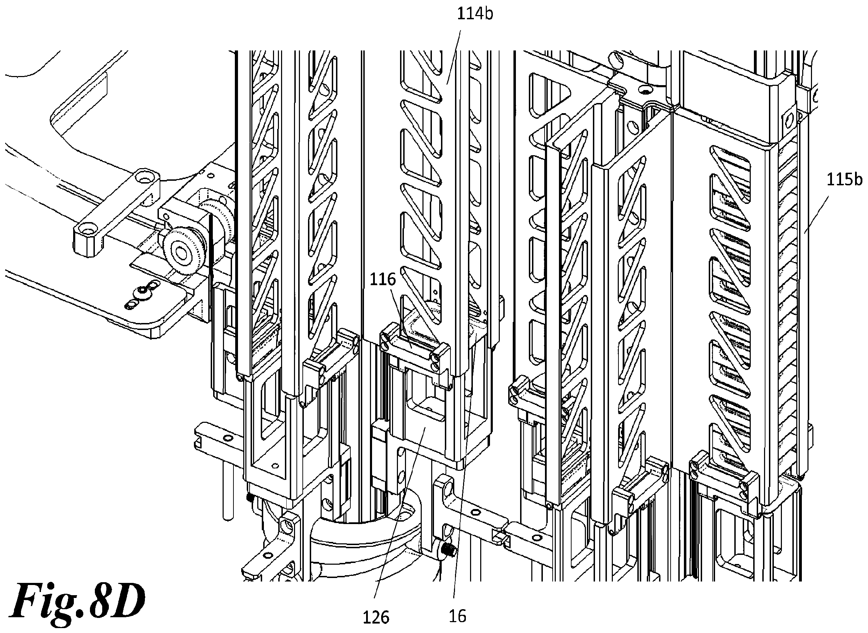

Fig. 8D is a schematic showing a blister completely raised into a tower section;

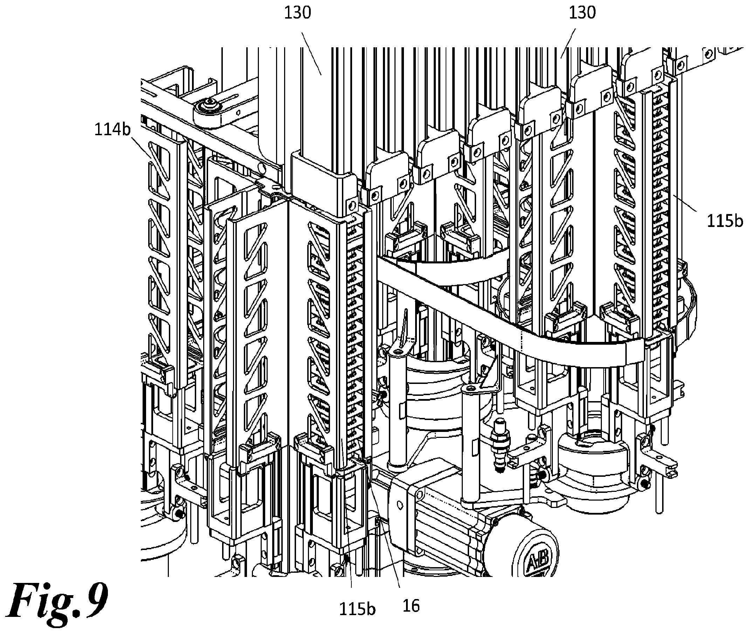

Fig. 9 is a schematic showing a full stack of blisters readyto be loaded into a tube; and

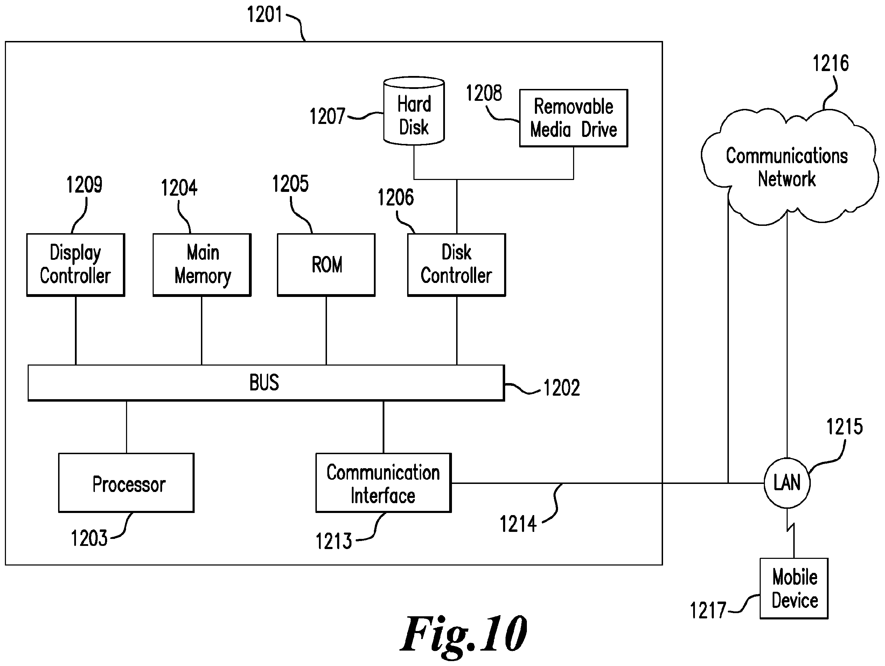

Fig. 10 is a schematic depicting an exemplary computer system for implementing various embodimentsof the invention.

### DETAILED DESCRIPTION

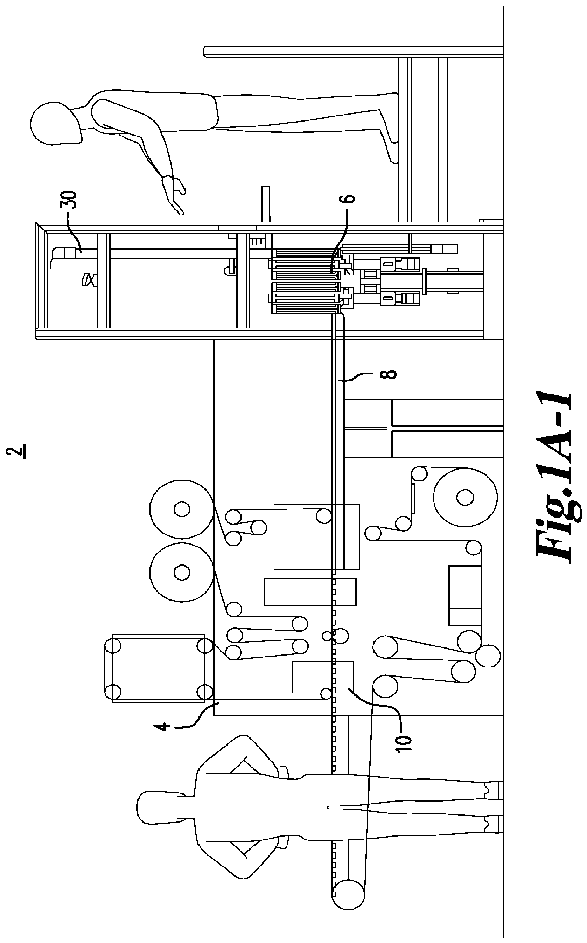

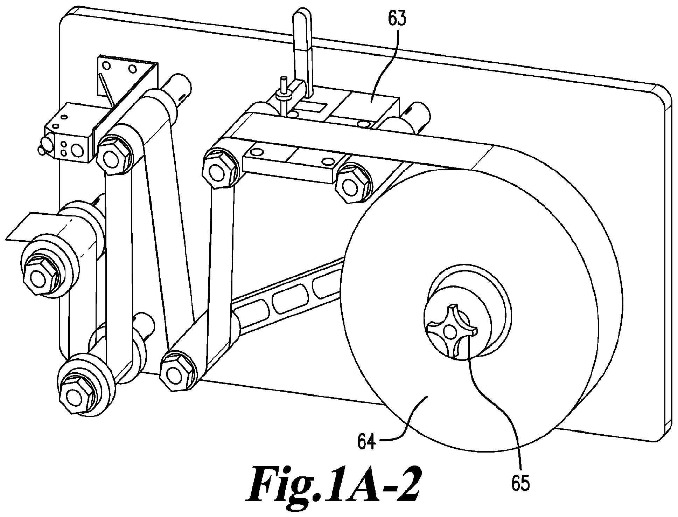

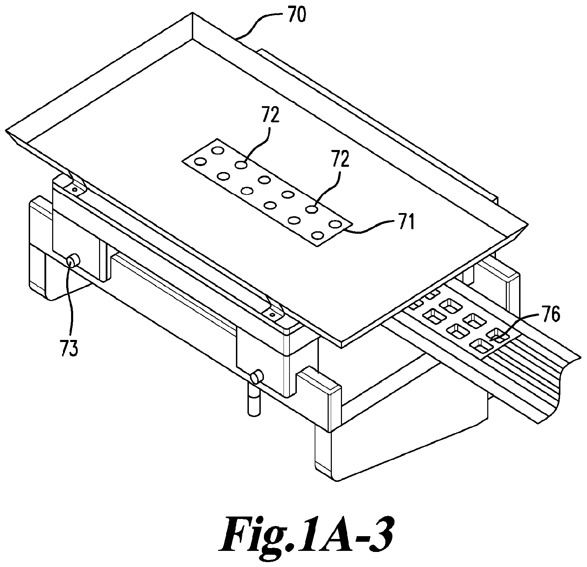

As shownin Fig. 1A-1, in one embodiment the blister-collation system 2 described herein collects blisters 16 from one or more blisterpackagers 4 (suchas for example an UhlmannBEC 300 packager) and up stacks theblistersby way of a novel blister stacker 6 into plug and play tubes 30. Plug and play tubes 30 can thereafterbe used as a source ofblisters 16 in situations where customized pill packs for patients are formed containing the sameor differentmedicationsas described, for example, in US Pat. Appl. Publ. No. 2010/0176145.

### Blister Packager

In the blisterpackager 4, blistermaterial roll 64 shown inFig. 1A-1 contains for example polyvinyl chloride (PVC) sheet materialwhich isunwound to form onepart of the blisters 16. The raw PVC material can be loaded by the operator ontoan expanding mandrel. The mandrel can be driven by an electric motor tounwindthe material. As shown in Figs. 1A-1 and 1A-2, the material can be fed through a series of rollers and a dancer arm. A material pre-heat and blister form station can heat the incoming material to a formable statefrom which the blisters can be formed. Once the machine indexes the pre-heated material, the tooling can clamp on the material, andthe plug assist will push into the material to form a cavity inthe materials (i.e., pre-form the blister). The machine will then force airinto the cavity to complete the blister cavity where a medication or otheritem can be placed. Once the forming process is complete, the tooling will open and wait for the system to index.

While the blisterpackager is particularly suitable for packaging individual solid unit dose medications, nutraceuticals or supplements, in principal anyindividual item could be packaged in the blisters.

Consistency in the forming station can be improved if interruptions from the packager 4 can be minimized. In one embodiment ofthe invention, to minimize the interruptions, a servo web feed (disposed after the blister form section) serve as an accumulation dancer. Fig. 1A-2 is a schematic depiction ofa PVC unwind system ofthe blister packager of the invention. Other known thermoformable materials such as PTE and PVD-C couldbe used instead of PVC if desired. When an operator filling the blister packages determines that the arrival rate of blister packs to be filled exceeds the filling rate, the operator can interrupt the feed of the blister packs by servo adjustment of the dancer arm 60 adding more pathlengthinto the conveyance of the blisterpacks from theblister pack former to the operator station. This permits the blister pack former to be tolerantof operator interruptions while not interrupting the packagecavity forming process discussed above. Fig. 1A-2. The PVC unwind isa low tension process.

In other words, the accumulationdancer arm shown in Fig.1A-2 permits the blister form station to operateindependentlyof the remaining stations of theblister packager 4. If packager4 has an interruption, theblisterform station shownin Fig. 1A-2A will continue to rumnd accumulate formed blistersheets with empty cavitiesin the dancer accumulation area (servo web feed).

In one embodiment ofthe invention, the dancer hasthree sensors, one to stop making blisters (accumulation full), and one to startagain (accumulation nearempty), and one to signal therest of the machineto start (accumulation empty). Blister load or operatorload station is an operator station where the medication is loadedinto blister 16. In general, an operator is responsible for loading the correct screen 71 for the medication that is being loaded into the blister sheets. Fig. 1A-3 is a schematic depictionof a filling ordosing stationwhere pills to fill the cavities are spread out and supplied through through hole channels 72in the screen 71 for the filling of the respective blister packages 16 below. A pneumatic cylinderindexesa pill drop dosing plate automatically based on the indexing sequence of the blisters. The dosing plate canbe mounted to linear rails on both sides with hard stopsfront and back. The dosingplate sits on the fixed, lower section of the dosing table, while the moveable uppersection contains the dosing screen71 and dosing tray 70 which can be raised andloweredto set the spacing ofthe dosing screen above the dosing plate for optimal dosing of differenthicknesses ofmedicaments A manual vertical adjustment permits the height ofthe upper screen 71 to be set relative to the pilldrop screen for different pillsizes. Once set, a horizontal lock73 secures the position.

As shown inFig. 1A-1, foil material is supplied toblister packager 4. Fig. 1A-3 shows the filled blister packages76 exiting to the rightbeforethe foil is overlaidon the blister packages. The foil material can be loadedmanually by an operator for example onto an expandable mandrel driven by an electric motor. The clutch can turn on and offbased on the position feedback from a dancer arm. When the clutch is off, the weightof the dancerarm pulls additional foil into the machine until the clutch turns on and stops the motion of the spindle. In one embodiment of the invention, the foil material is fed through a series ofrollers and into a printer (e.g., a Domino printer). The printer prints the appropriate information 24 on the foil material, and then the foil material indexes towards blister seal station 10.

At blisterseal station 10, the blister material and the printed foil material are heat sealed together to forma blister sheet. The two materials can be pressedogether using pneumatic cylinders. Pressure for the pneumatic cylinders can be manually adjustedusing a pressure regulator. Alternatively, the pressure can be automatically adjusted by a pressure controller in communication with a system control 50. The heat can be adjusted manually using a heater controller. The heat can be adjusted automatically by the systemcontrol 50. The sealing time is expected to be set manually .

As shown inFig. 1A-1, a servo webfeed advances theblister sheet through the blister packager 4. The lower roller ofthe servo feed maybe made from a rubber roller thatwill grip the blister sheetbetweenthe blisters and on the ends ofthe blister sheet. The upper rollerof the servo feed will apply spring pressure down on the lower rollerto maintain consistent grip. The servo and gearbox can pull the material through the blister packager 4 with the index length verified by an encoder count. The index is adjustable.

As shown inFig. 1A-1, a blister inspect station caninspect the formed blisters on the blister sheet with one or more cameras. For example, a top camera can inspect the printing on the blisters and read thebarcodes to make sure they are readable using for example a Cognex DataMan barcode reader. A lower camera, also for example a Cognex In-Sight Micro, can view the blisters to insure pill presence, look for multiple pillsin a blister, and look for broken pills. Once the blisters passthis station, theblisters can be labeled as pass or fail and tracked through the machine.

As shown inFig. 1A-1, a blisterdie cut station cuts or punches the individual blisters from the blister sheet. The cutting die will index up using a pneumatic cylinder. Once the die has cut the blisters from the sheet, a secondary pneumatic actuator will hold the individual blisters with vacuum suction cups and lower the blisters down ontcthe cleated conveyor.

As shown in Fig. 1A-1, a scrap rewindpulls the excess materialfrom the blister cut and wraps it onto a mandrel driven by an electric motor. The motor will turn on and off based on the position feedback from a dancer arm. The operatoris responsible for removinghe scrap material from the roll when it isfull.

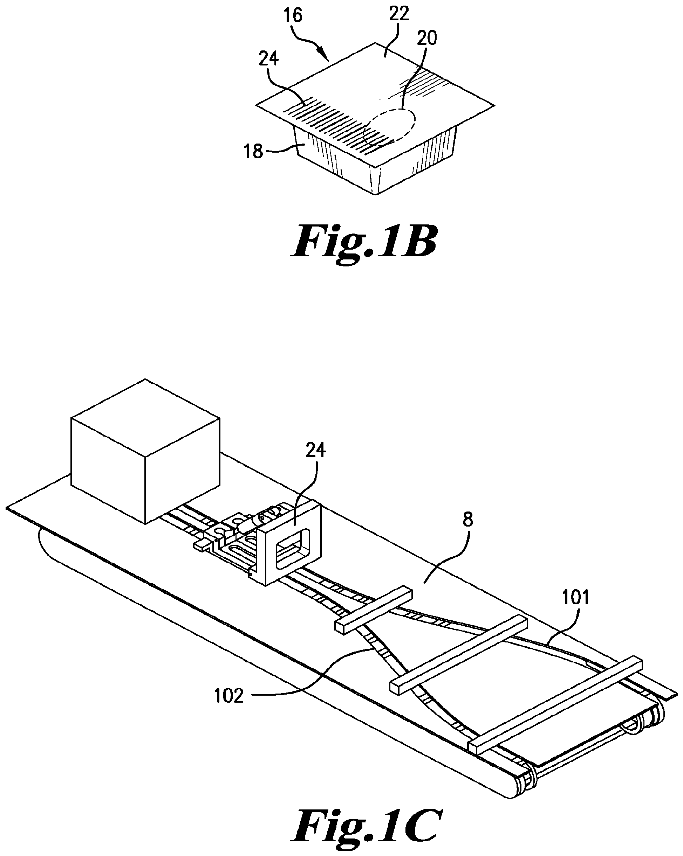

As shown inFig. 1B, in one embodiment of the invention, themedications/supplements produced byblisterpackager 4 are provided in blisters 16 sized to receive an individual dose of a particular medication/supplement, commonly referred to as a blister pack. With reference to Fig. 1B, an exemplary blisterl6 includes a baseportion 18 defining the above-noted cavity for receiving the individual doseof the medication/supplement 20, and a generally planar closure 22 disposed over an open endof the base portion 18. In one embodiment ofthe invention, the peripheral dimensions of the blister capsule baseportion 18 of the unit dose packages are smallerthan the perimeter dimensions of the upper, generally planarclosure 22 of the packages 16. This helps to limit the area that the tooling needs tocontact to the blister packaging. The blisters 16 may be provided with information 24related to the medication/supplement 20 contained in the packages 16, such as the name of the medication/supplement 20, the manufacturer, the date manufactured,the lot number, and/or other information. In the embodiment shown, information is provided on the closure portion22 and includes machine-readable information, such as a bar-code, that may be used to facilitate the automated storing, tracking, dispensing, and packaging of orders. Fig.2A shows an example of a bar code reader 52 to read and verify the tube barcodeand in turn associates the loaded blister to the tube. Blisterbarcodesare preferably read prior to the nest inlet 14a in Fig. 2A-2 (barcode reader not shown, see Fig6).

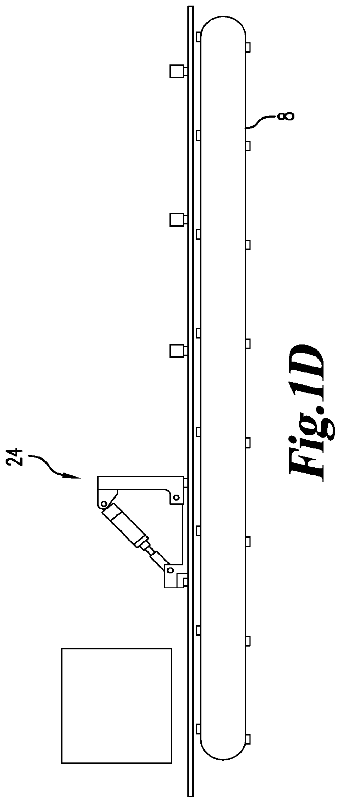

In one embodiment ofthe invention, as shownin Fig. 1C, a pneumatic bridge (gate 24)is located after exiting the packager4. In one embodiment ofthe invention, this bridge can be pneumatically activated with a springreturn. In one embodiment of the invention, the bridge can be lowered when a known good blisteris being indexed which wilhllow the good blisters to by pass the reject bin and travelto the blister stacker 6. Fig. 1D shows a perspective where the conveyor 8 is passing acceptable blisters 16 on toward the blister stacker 6. In one embodiment of the invention, the default position for thisbridge is up. If a blisteris not known tobe good, the blister will fallinto a reject bin during conveyor indexing forward.

In one embodimentof the invention, asshown in Fig.1C, multiple tracks (e.g., see track 101 and track 102 on Fig. 1C) provide a wayto transportblisters, in each track, to the stacker. Each track will be able topass or reject a single blister with each index of the cleated convey or and separate out acceptable from non-acceptable blisters 16Accordingly, in oneembodiment ofthe invention, anumber of tracks (2, 3, 4, 5, tracks etc.) can be provided. In the embodiment,the bins are categorized with a first bin being for blisters that possibly have medications while a second bin is for known empty blisters. In one embodiment of the invention, a pneumaticotating dividerbetween the bins diverts the blistersas required per track (gate 24 in Fig.1C and ID).

In one embodiment ofthe invention, as shownin Fig. 1D, conveyor 8 is a servo indexing cleated conveyorthat transports blisters from the punch dieto the blister stacker 6. This conveyor can index approximately6" each cycle. In one embodiment of the invention, blisters 16 from the blister packager 4 travel on a conveyor 8 segregated in two a more tracks or lanes,for example between 2 -10lanes, before arrivingat respective blister-stacker 6. In one embodiment of the invention, rails are incorporated onto the conveyor to define thedifferenttracks.

As shown in Figs. 2A-1 and 2B, guide rails 32 disposed above the surface of the conveyor 8 move and segregate the blisters 16 into differenttracks or lanes. The rails 32 serve to segregate the blisters into multiple lanes (e.g., 2-10 lanes). In one embodiment of the invention, the rails 32 separate the centers ofthe lanes by a distanceof 10- 60 cm and preferably 30 cm. In one embodiment ofthe invention, asshown in Fig. 2A-1, theblisters exit from conveyor 8 onto a nest inlet 14a under a collection tower 14.

The conveyor typically has a width ranging between 0.5 m and 5 m. The width of the conveyoris set according to the rate of blisters required. Conveyor canbe approximately 36"wide. In one embodiment of the invention, a slip belt could be employed on the conveyor ora section of the conveyor versus the cleated conveyor. A slipbelt permits the blisters toslide relativeto the surface of the belt.

### Blister Stacker

In one embodiment ofthe invention, blister-stacker 6 is capable of stacking up to 100 shallow blisters,75 medium blisters or 75deep blisters into each plug and play tube 30, for example in each of the tubes 30 shownin Fig. 2B. In one embodiment of the invention, the blister-stacker 6 can run at a rate of 300 ppm (75 ppm per lane to eachblister stacker). This rate will be dependent on the rate in which the blisters are supplied from the blister packager 4.

In one embodiment ofthe invention, as shownin Fig. 3A, each blister-stacker 6 includes multiple blister collection towers,e.g., one or more pairs of blister collection towers 14 and 15. In one embodiment ofthe invention, each blister stacker 6 has a pneumatic rotating cylinder 12a which permits the blister collation dialassemblies 12 (connectedby rotatable arm 12b) to rotate about a vertical axis of the pneumaticrotating cylinder 12ato angular positions such thatblister collection tower 14 (as shown inFig. 3A) can be positioned with its nestassembly inlet 14a aligned to receive blisters 16 from the tracks (orfrom the conveyor)while blister collectiontower 15 can be positioned adjacent the storage tubes 30. Both blister collectiontowers 14 and 15 in this example have 4 tower segments each, 14b and 15b. Blisters 16 stacked in collection towers 15 can be transferred into storage tubes 30.

Fig. 3B shows a close-up ofa base of an exemplary collectiontower 14. At the base ofeach tower section 14b isa blister opening 14a for receiving blisters from the conveyor. Thenest assembly 26 is supported by a barrel cam 34 which has a cam follower 32 that travels with the barrel cam 34 as it rotates. The barrel cam and cam follower are raisedduring rotation as they travel up incline 35. The movement up the incline in turn lifts the nest assembly 26 into each tower section 14b. As the nest assembly rises, the blister passes through gate 54. Once the blister has passed the gate 54, the gate will hold the blister in the tower and the nest assembly will be lowered to its original height as the barrel cam and cam follower travel down a decline. The nest assembly 26 will reach its original height by the time it arrives at its starting position where the blister entrance 14a is again ready to receive a blister from a conveyor track.

Fig. 4 shows a collection tower 14 in a first position for loading blister packages from the conveyor 8 and a second collection tower 15 in a second position for unloading a filled stack of the blister packages. Theblister collationdial assembly 12 (once one tower is full) rotates to put an empty tower 14 into apositionto be filled. Once the empty blister collation tower 14 is in position, the blisters resume travel on the conveyor8 into the nest inlet 14a of the nest assembly 26. In one embodiment ofthe invention, anair assistance devicecan aid in the loading of individualblisters 16 into the nest inlet 14a. Alternatively,an overhead roller above the conveyor can driveor feed blister packs from conveyorinto the dial nest assembly 14a or a cylinderpusher with a finger thatsits behind the back edge of the blister for positive loading controlof the blister into nest 14a.

In one embodiment of the invention, thereis a pneumatic stoplocated at an entrance ofthe blister stacker 6. The pneumatic stop is used to stop any blisters from progressing after a blister collectiontower 14 is full. As shown in Fig. 3A, each blistercollation dial assembly 12 may include four (4) blister collectiontower sections 14b located90 degrees apart. Each collection tower section isconfiguredto accept shallow,medium or deepblisters with no change over. Each collectiontower section 14b can be located at a fixed position above a nestassembly 26 oneach blister collation dial 12.

In one embodiment of the invention, eachcollation dial assembly 12 has a servo 12c to rotate the collectiontowers and/or the nest Each nest assembly26 can be made of, for example, stainless steel. The nestassembly 26 can be mounted to a vertical rail 28 which may extend a full length of the storage tower 14.

Fig. 7 is a general overviewof an embodimentof a cleated conveyor assembly and stacking assembly 106 having two sets of stacking towers 114 and 115. Blisters 16 are supplied to each pair of stacking towers by a conveyortrack 101, 102.

Fig. 8A shows theblisters as they are indexed along the cleated conveyor. The blister at the end of the conveyortrack 102 is ready to enterinto the collation dial nest. Thenest assembly 26 collects a single blister as it exits the conveyor 8 into the nest inlet 114a. As shown in Fig.8A, in one embodiment the upper surface of the nestassembly which receives the blisters is U-shaped.

Fig. 8B shows a blister 16 in positionin the collation dial nest 126 below a blister tower section 114b, just prior to the index of the collation dial. A sensor(not shown) can detect when a blister has fully entered the nest 126 and is ready to rotate. As the dial rotates 90 degrees, the nest assembly (with blister 16) will be raised by the helical cam, which is internal to the nest 126 and starts to load the blister into the storage tower section 114b.

Fig. 8C shows the blister in the nestafter it has beenindexed 90° in the collation dial. At this point one blister 16 is also starting tobe raised into the stack tower section 114b via the incline 35 on the barrel cam.

The nestassembly 126, after another 90 degree turn(180 degrees from start) will locate the blister at the top dead center of the cam. Fig. 8D shows the collation dial indexed another 90° so that the first blister 16 is 180° from the end of the conveyor. At this point the first blister hasbeen completely raised into the stack tower section 114b and has been pushedpast the spring loaded catches 116 located on either sideof the stack tower section 114b. These spring loaded catches will support the blister as the blister nest 114a starts back down the barrel cam on the decline on the opposite side. The nest 114a will then be empty and ready for another blister to enter the nest. After releasing the blister 16, the dial rotates twice another 90 degrees and the nest 126 will be lowered back into the position where the load process started. At each index of the cleated conveyor a blister is inserted into the nest inlet 114a and before the nextindex the collation tower 114 rotates 90 degrees to move the nextblister inlet 114a into position for the cleated conveyor to inserthe next blister. In one embodimentof the invention, a 360 degree cycle is used for each full cycle. Accordingly, there are different embodiments for the order of inserting blister packs. The packs may be inserted sequentially in each ofthe four tower sections,the blister packs maybe inserted serially in one tower until thattower is full orpartially full, the blister packscan be insertedon a schedule between one tower and another toweror tower section. Amixed sequence canbe used if different products are to be collectivelygrouped together.

In a preferred embodiment, each blister collection tower hasfour tower sections 14b as shown in Fig. 3A. However, eachtower may have 2, 3, 5, 6, or othernumber of tower sections 14b with correspondingnests 14a under each section. Preferably, the tower sections are evenlyspaced (angularly and/or physically) around a perimeter of the tower section.

In one embodiment ofthe invention, a first group of collection towers 14 (e.g., all four collections towers) canrotate while the blisters are loadedinto the towers 14 from four separate tracks. In another embodiment, the systemhas twotracks with two receiving towers 14. The blisters may ride upan incline, driventhrough the barrel cam,to push the blister into one of the towers. This procedure pushes the blister packs upwardinto the collectiontower section. The upward motion moves theblister packagainst gravity. In this embodimentgravity and air resistance may act against the blister packto hold the blister pack's orientation during loading, permitting higher rates of packs to be pushed without compromise of the stack integrity. In one embodiment ofthe invention, sequentialblisters ride up the incline and are pushed intoone or more of the towers 14. In another embodiment of the invention, sequential blisters ride up the incline and are pushed into adjacent towers. When a collection tower 14 is full, rotatablearm 12b switches the first collection tower 14 to an offload position (where the blisters can be unloaded from the tower 14 into the plug and playtubes 30) and a second collection tower 15 (empty) is rotated into the loading position.

The tower sections 14b are configuredin such a way as to have as fewcontact points with the blistersas possibleto reduce drag on the blisters. The profile for the plug and play tubes 30 can accommodate thisconfiguration. Forexample, each storage tower section 14b can be configured to accommodate upto 20 shallow, 17 medium blisters or 15 deep blisters with no change over The towers and tower sections may bemade of aluminum or other suitable material. In one embodiment of the invention, there is a flip gate 54 at the bottom of each tower section 14b to preverthe blisters from fallingout the bottom once the blisters havebeen placed in the tower section 14b.

Fig. 9 shows fullystacked tower sections 115b section ready to be loaded into the magazine tubes 130. This is accomplished via an electric actuator mounted below the blister nest. Theactuator will lift the blister nest through anopening inthe barrel cam and this will then push all the blisters up into the magazinetube 130.

In one embodiment ofthe invention, once the towers 14 are full, the cleatedconveyorwill stop indexingto the filling position. The full collation dial assembly will be changed out for an empty oneusing the pneumatic rotary actuator to rotate the full set of collectiontowers 14 as the collation dial assembly 12 is rotated around rotatable arm 12b. Once the empty collation dial 12 is moved into position, the indexing conveyor is activated to allow blisters to continue to be stacked in empty towers 15 while the full collation dial is loaded into the plug and play tubes 30.

### Plug and Play Tube Load Station

Fig. 4 is a schematic showing a servo 12 that has a cylinderwhich pushesblisters 16 from the collectiontowers 14 of blister stacker 6 up into plug and play tubes30. In one embodimentof the invention, a totalof twenty-four(24) plug and play tubes 30 are loaded (6 per each of the four collation dial assemblies). The plug and play tubes 30 will be loadedonto a linear servo slide. In one embodiment ofthe invention, the blister-stacker 6 loadsfour or more tubes30 concurrently. Once the tubes 30 (or any 1 of the tubes) are filled,a servo slidewill move the filedtube over (e.g., over 5.0 cm,) which will move a setof empty plug and play tubes30 into position to be filled. The filled tubes may then be utilized in storage modulessuch as those discussed in US Pat. Appl. Publ. No. 2010/0176145. The caps will not berequired tobe removed. The operator may simply load the tubes 30, attach the top using the slot inthe cap, and place a clip 40 from a magazine42 onto tube 30. In one embodiment of the invention, as shown in Fig. 5, there is a magazine 42 locatedin front of each tube 30 at the blisterload stations(4 total). This will allow theblister-stacking system to automatically insert clip 40 onto each tube 30 after it is filled.

In a preferred embodiment the storage tubes are separate from the collection towers, as explained inmore detail below. Nevertheless, in one embodiment, the storage tubescould be accommodatedon/with the collectiontowers sothat a loading of a collection tower in effect loadeda storage tube. However, with the storage tubes separatefrom the collectiontowers, the process of loading the tubesis separated from the ongoingtower loadingmeaningthat there need not be any interruption of the conveyor and product delivery and individual blister pack stackingwhile the storage tubes are filled and secured.

In one embodiment ofthe invention, as shownin Figs. 2A-1 and 6, thereis a bar code reader 52 located at each tube load station (e.g., at four total load stations). Thebar code reader 52 can read the bar code prior to any blisters being loaded into the tubes. If a bar code is not read, the module will alert the operator or the control systemof the blister-stacking system.

In one embodiment ofthe invention, thereis a light curtainlocated atboth ends of the tube station. The light curtain permits an operator to changetubes at any time but will notallow the servo slide to move tubes while an operator is inside the light curtain.

While blisters are loaded from towers into tubes in a preferred embodiment, theblisters could be loaded into sleeves, cartridges, magazines, or other suitablestorage containerwhich can be utilized by alater deviceto dispense the blisters.

### Controls

In one embodiment ofthe invention, the blister-collation system includes system control 50 (as noted above). The system control includes power, sensor, and communication networks, including for examplepower distribution,programmable logic control, power supplies, sensors, and safety relays. In oneembodimentof the invention, the control system is machine control system having for example an Allen Bradley Compact Logixwith Ethernet communication and an Allen-Bradley PanelviewPlus 7" color touch screen HMI to control all normal functions of the blister-stacking system. A managed Ethernet switch will be provide for communication to the machine Ethernet network with an open portavailable for connection to a customer network. Servo controls will utilize Allen-BradleyKinetix 350 drives with Ethernet. Pneumatic controls will utilize SMC pneumatic manifolds with Ethernet communication(Ex250 series) and remoteI/O modules. Push buttons preferablycontrol the important functions of the blister-stacking system. A stack light will be provided with an audible alarm and machine status indication.

The blister-collationsystem control system, in one embodiment isequipped with an Emergency Power Off(EPO) safety circuit. This circuit removes all potential energy from the system with the exceptionof PLC power, low power indicatorcircuits and communication power. This circuit is used for serious emergencyconditions where there is an immediate danger of injury or equipment damage. An adequate amount of E-Stop push buttons wilbe provided to ensure the safe operation of the machine.

In one embodiment ofthe invention, guard doors have hard wired power to unlock safety interlock switchesto provide safeentry into the components of the blister-stacking system. In one embodiment ofthe invention, allmachine motion is interrupted untilall guard doors are securely shut.

FIG. 10 illustrates acomputer system 1201 for implementingvarious embodimentsof the invention. The computer system 1201 maybe used as system control50 to perform any or all of the functions described above. The computer system 1201 includes a bus 1202 or other communication mechanism for communicating information, and a processor 1203 coupled with the bus 1202 for processing the information. Thecomputer system 1201 also includes a main memory 1204, such as a random access memory (RAM)or other dynamicstorage device (e.g., dynamic RAM(DRAM), static RAM (SRAM), andsynchronousDRAM (SDRAM)), coupled to the bus 1202 for storing information and instructions to beexecutedby processor 1203. In addition, the main memory 1204 may be used for storing temporary variables or other intermediate information during the execution of instructions by the processor 1203. The computer system 1201 further includes a read only memory (ROM) 1205 or other static storage device(e.g., programmable readonly memory (PROM), erasable PROM(EPROM), and electrically erasable PROM (EEPROM)) coupled to the bus 1202 for storing staticinformation and instructions for the processor 1203.

The computer system 1201 alsoincludes a disk controller 1206coupled to the bus 1202 to control oneor more storagedevicesfor storing information and instructions, such as a magnetic hard disk 1207, and a removablemedia drive 1208 (e.g., floppy disk drive, read-only compact disc drive, read/write compactdisc drive, compactdisc jukebox, tape drive, and removable magneto-optical drive). The storage devicesmay be added to the computersystem 1201 using an appropriate device interface (e.g.,small computer systeminterface(SCSI), integrateddevice electronics (IDE), enhanced-IDE (E-IDE),direct memory access (DMA), orultra-DMA).

The computer system 1201 mayalso include special purpose logicdevices (e.g., application specific integratedcircuits (ASICs)) or configurable logic devices (e.g., simple programmabldogic devices (SPLDs), complex programmable logicdevices (CPLDs), and field programmable gate arrays (FPGAs)).

The computer system 1201 mayalso include a display controller 1209coupled to the bus 1202 to control a display, such as a cathode ray tube (CRT),for displaying information to a computer user. The computer system includesinput devices, such as a keyboard and a pointing device, for interacting with a computer user(e.g., an operator) and providing information to the processor 1203. The pointingdevice, for example, may be amouse, a trackball, or a pointing stick for communicating direction information and command selections to the processor 1203 and for controlling cursor movement or the display. In addition, a printer may provide printed listings of data stored and/or generated by the computer system 1201.

The computer system 1201 performs a portion or all of the processing stepsof the invention (such as for example those described in relation to blister packaging and stacking) in response to the processor 1203 executing oneor more sequencesof one or moreinstructions contained in a memory, such as the main memory 1204. Suchinstructions may be read intcthe main memory 1204 from another computer readablemedium, suchas a hard disk 1207 or a removable media drive 1208. One or more processors in amulti-processingarrangement mayalso be employed to execute the sequences of instructions contained in main memory 1204. In alternative embodiments, hard-wired circuitry may be usedin place of orin combination with software instructions. Thus,embodiments are not limited to any specific combination of hardware circuitry and software.

As stated above, the computer system 1201 includes at least one computer readablemedium or memory for holdinginstructions programmedaccording to the teachings of the invention and for containing data structures, tables, records, or other data described herein. Examples of computer readable media are compact discs, hard disks, floppy disks, tape, magneto-optical disks, PROMs (EPROM, EEPROM, flash EPROM), DRAM, SRAM, SDRAM,or any othermagnetic medium, compact discs (e.g., CD-ROM),or any other optical medium, punch cards, paper tape, or other physical medium with patterns of holes, a carrier wave (described below), or any othemedium from which a computer canread.

Stored on any one or on a combination of computer readable media, the invention includes software for controlling the computer system 1201, for driving a device or devices for implementing the invention, and for enabling the computer system 1201 to interact with a human user. Such software may include,but is not limitedto, device drivers, operating systems,developmenttools, and applications software.Such computer readablemedia further includes the computer program product ofthe invention for performin gall or a portion (if processing is distributed) of the processing performed in implementing the invention.

The computer code devices of the inventionmay be any interpretable or executable code mechanism, includingbut not limited to scripts, interpretable programs, dynamic link libraries (DLLs), Java classes, and complete executable programs. Moreover,parts of the processing ofthe invention may be distributed for better performance, reliability, and/or cost. The term "computer readablemedium" as used herein refersto any medium that participates in providing instructionsto the processor 1203 for execution. A computer readable medium may take many forms, includingbut not limited to,non-volatile media, volatile media, and transmission media. Non-volatilemedia includes, for example, optical, magnetic disks, and magneto-optical disks, suchas the hard disk 1207 or the removable media drive 1208. Volatile mediaincludes dynamic memory,such as the main memory 1204. Transmission mediaincludes coaxial cables, copper wire and fiber optics, including the wires that make up the bus 1202. Transmissionmedia also may also take the form of acoustic orlight waves, such as those generated during radio wave and infrared data communications.

Various formsof computer readable media maybe involved in carrying out one or more sequences of one or more instructionto processor 1203 for execution. For example, the instructions may initially be carried ona magnetic disk ofa remote computer. Theremote computer can load the instructions forimplementingall or a portion of the invention remotelyinto a dynamic memory and send the instructions over a telephondine using a modem A modem local to theomputer system 1201 may receive the data on the telephoneline and use an infraredtransmitterto convert the data to an infrared signal. An infrared detector coupled to the bus 1202 can receive the data carried in the infrared signal and place the data on the bus 1202. The bus 1202 carries the data to the main memory 1204, from which the processor 1203 retrieves and executes the instructions. The instructions received by the main memory 1204 may optionally be stored on storage device 1207 or 1208 either before orafter execution by processor 1203.

The computer system 1201 also includes a communication interface 1213 coupled to the bus 1202. The communication interface 1213 provides a two-way data communication coupling to a network link 1214 that is connected to,for example, a local area network (LAN)1215, or to another communications network 1216 suchas the Internet. For example, the communication interface 1213 may be a network interface cardto attach to any packet switched LAN. As another example, the communication interface 1213 may be an asymmetrical digital subscriber line (ADSL)card, an integrated services digital network (ISDN) cardor a modem to provide a data communication connectionto a correspondingtype of communications line. Wireless links mayalso be implemented. Inany such implementation, the communication interface 1213 sends and receives electrical, electromagnetioor optical signals that carry digital data streams representing various types of information.

The network link 1214 typically provides data communicationthrough one or more networks to other datadevices. For example, the network link 1214 may provide a connection to another computer through a local network 1215 (e.g., a LAN) or through equipment operated by a service provider, which provides communication services through communications network 1216. The local network 1214 and the communicationsnetwork 1216 use, for example, electrical, electromagnetic, oroptical signals that carry digital data streams, andthe associated physical layer (e.g., CAT 5 cable, coaxial cable, optical fiber, etc). The signalsthrough the various networks and the signals on thenetworklink 1214 and through the communication interface 1213, which carry the digital data to and from the computer system 1201 maybe implemented in baseband signals, or carrier wave based signals. The baseband signalsonvey the digital data as unmodulatedelectrical pulses that are descriptive of a stream of digital data bits, where the term "bits"is to be construed broadly to mean symbol, where each symbol convey sat least one or more information bits. The digital data may also be used to modulate a carrier wave, such as with amplitude, phase and/or frequency shift keyed signals that are propagated over a conductivemedia, or transmittedas electromagnetic wavesthrough a propagationmedium. Thus, the digitaldata may be sent as unmodulated baseband data through a "wired" communication channel and/or sent within a predetermined frequency band, differentthan baseband, by modulating a carrier wave. The computer system 1201 can transmit and receive data, including program code,through the network(s) 1215 and 1216, the network link 1214, and the communicationinterface 1213. Moreover, thenetworklink 1214 may provide a connection through a LAN 1215 to a mobile device 1217 such as a personal digital assistant(PDA) laptop computer, or cellular telephone.

Numerous modifications and variations of the present invention are possible in light of the above teachings. It is therefore to be understood that within the scope of the appended claims, the invention may be practiced otherwisethan as specifically describedherein.

## Claims

1. A blister package stacker (6) for reception and stacking of blister packages (16) containing an item, comprising:
a first blister collection tower (14) having a collection tower storage section (14b);
a nest assembly (26) for holding one of the blister packages, the nest assembly having a nest inlet for reception of the blister packages from a conveyor (8); and
a tower gate for retaining blister packages in the collection tower storage section,
wherein the nest assembly is configured to insert one blister package at a time upward into a bottom of the collection tower storage section;
wherein the nest assembly (26) is rotatable with the collection tower storage section and during rotation raises for insertion one of the blister packages into the collection tower storage section.

2. The stacker of claim 1, wherein the nest assembly (26), upon rotation, raises vertically said one of the blister packages into the collection tower storage section.

3. The stacker of claim 2, wherein the nest assembly (26) is connected by a cam follower to a barrel cam driving said rotation and raising the nest assembly.

4. The stacker of claim 1, wherein the tower gate comprises a flip gate at a bottom thereof to prevent the blister packages from falling out once the blisters have been placed in the collection tower storage section (14b).

5. The stacker of claim 1, further comprising a second blister collection tower (15), wherein the first and second collection towers are disposed on a rotatable arm.

6. The stacker of claim 5, wherein the first and second blister collection towers (14,15) each comprise between two and four collection tower storage sections disposed in separate quadrants.

7. The stacker (6) of claim 5, further comprising a rotatable cylinder, wherein the first and the second blister collection towers are disposed at opposite ends of the rotatable arm and the rotatable cylinder is connected to a center of the rotatable arm.

8. The stacker (6) of claim 7, wherein the rotatable arm rotates the first and second blister collection towers between a first position where the blister packages are loaded into at least one of the collection tower storage sections and a second position where a stack of blister packages filled in said at least one of the collection tower storage sections can be unloaded.

9. The stacker (6) of claim 8, further comprising at least one storage tube, and wherein the blister packages in the second position are unloadable into the storage tube positioned over the stack in the collection tower storage section.

10. The stacker (6) of claim 9, further comprising a magazine (42) of clips for sealing the at least one storage tube once the stack of the blister packages has been inserted into the storage tube.

11. The stacker (6) of claim 1, wherein the collection tower storage section holds a stack of the blister packages at selected contact positions on a periphery of each of the blister packages.

12. The stacker (6) of claim 1, wherein the nest comprises a stainless steel material.

13. The stacker (6) of claim 1, wherein the collection tower storage section (14b) comprises an anodized aluminum material.

14. The stacker (6) of claim 1, further comprising a push arm configured to push a stack of the blister packages from the collection tower storage section into storage tubes, wherein the push arm is connected to a servo cylinder.

15. The stacker (6) of claim 1, further comprising a controller which is configured to execute one or more of the following:
receive a first sensor signal indicating that the blister package is loaded in the nest and transmit a first control signal to rotate a dial and raise the nest;
receive a second sensor signal indicating that the collection tower storage section is completely full and transmit a second control signal to push a stack of blister packages from the full collection tower storage section into a storage tube;
receive a third sensor signal indicating that a blister collection tower is full of the blister packages and transmit a third control signal to stop production of the blister packages; and
receive a fourth sensor signal including information on the item in the blister packages in the storage tubes and store said information.

## Patentansprüche

1. Ein Blisterverpackungsstapler (6) zum Aufnehmen und Stapeln von Blisterverpackungen (16), die einen Gegenstand aufweisen, umfassend:
einen ersten Blistersammelturm (14) aufweisend einen Sammelturmlagerabschnitt (14b);
eine Nestanordnung (26) zum Halten einer der Blisterpackungen, wobei die Nestanordnung einen Nesteinlass zum Aufnehmen der Blisterpackungen von einem Förderband (8) aufweist; und
ein Turmtor zum Behalten von Blisterverpackungen in dem Sammelturmlagerabschnitt,
wobei die Nestanordnung dazu eingerichtet ist, eine Blisterpackung zu einem Zeitpunkt nach oben in einen Boden des Sammelturmlagerabschnitts einzuführen;
wobei die Nestanordnung (26) mit dem Sammelturmlagerabschnitt drehbar ist und während der Drehung eine der Blisterpackungen zum Einführen in den Sammelturmlagerabschnitt anhebt.

2. Der Stapler nach Anspruch 1, wobei die Nestanordnung (26) bei Drehung die eine der Blisterpackungen vertikal in den Sammelturmlagerabschnitt anhebt.

3. Der Stapler nach Anspruch 2, wobei die Nestanordnung (26) durch einen Nockenstößel mit einem Tonnennocken verbunden ist, der die Drehung antreibt und die Nestanordnung anhebt.

4. Der Stapler nach Anspruch 1, wobei das Turmtor ein Klapptor an dessen Boden aufweist, um zu verhindern, dass die Blisterpackungen herausfallen, sobald die Blister in dem Sammelturmlagerabschnitt (14b) angeordnet wurden.

5. Der Stapler nach Anspruch 1, weiterhin umfassend einen zweiten Blistersammelturm (15), wobei der erste Sammelturm und der zweite Sammelturm auf einem drehbaren Arm angeordnet sind.

6. Der Stapler nach Anspruch 5, wobei der erste Blistersammelturm und der zweite Blistersammelturm (14, 15) jeweils zwischen zwei und vier Sammelturmlagerabschnitten umfassen, die in getrennten Quadranten angeordnet sind.

7. Der Stapler (6) nach Anspruch 5, weiterhin umfassend einen drehbaren Zylinder, wobei der erste Blistersammelturm und der zweite Blistersammelturm an gegenüberliegenden Enden des drehbaren Arms angeordnet sind und der drehbare Zylinder mit einem Zentrum des drehbaren Arms verbunden ist.

8. Der Stapler (6) nach Anspruch 7, wobei der drehbare Arm den ersten Blistersammelturm und den zweiten Blistersammelturm zwischen einer ersten Position, wo die Blisterpackungen in mindestens einen der Sammelturmlagerabschnitte geladen sind, und einer zweiten Position dreht, wo ein Stapel von Blisterpackungen, die in dem mindestens einen der Sammelturmlagerabschnitte gefüllt sind, entladen werden kann.

9. Der Stapler (6) nach Anspruch 8, weiterhin umfassend mindestens ein Speicherrohr, und wobei die Blisterpackungen in der zweiten Position in das Speicherrohr, das über dem Stapel in dem Sammelturmlagerabschnitt angeordnet ist, entladbar sind.

10. Der Stapler (6) nach Anspruch 9, weiterhin aufweisend ein Magazin (42) von Clips zum Versließen des mindestens einen Speicherrohrs, sobald der Stapel von den Blisterpackungen in das Speicherrohr eingeführt wurden.

11. Der Stapler (6) nach Anspruch 1, wobei der Sammelturmlagerabschnitt einen Stapel von den Blisterpackungen an ausgewählten Kontaktpositionen an einem Umfang jeder der Blisterpackungen hält.

12. Der Stapler (6) nach Anspruch 1, wobei das Nest ein rostfreies Stahlmaterial aufweist.

13. Der Stapler (6) nach Anspruch 1, wobei der Sammelturmlagerabschnitt (14b) ein anodisiertes Aluminiummaterial aufweist.

14. Der Stapler (6) nach Anspruch 1, weiterhin umfassend einen Schubarm, der dazu eingerichtet ist einen Stapel von den Blisterpackungen aus dem Sammelturmlagerabschnitt in Speicherrohre zu schieben, wobei der Schubarm mit einem Servozylinder verbunden ist.

15. Der Stapler (6) nach Anspruch 1, weiterhin aufweisend eine Steuerung, die eingerichtet ist, einen oder mehrere der folgenden Schritte auszuführen:
Empfangen eines ersten Sensorsignals, das anzeigt, dass die Blisterpackung in das Nest geladen wird, und Senden eines ersten Steuersignals, um ein Zifferblatt zu drehen und das Nest anzuheben;
Empfangen eines zweiten Sensorsignals, das anzeigt, dass der Sammelturmlagerabschnitt vollständig voll ist, und Senden eines zweiten Steuersignals, um einen Stapel von Blisterverpackungen aus dem Sammelturmlagerabschnitt in ein Speicherrohr zu schieben;
Empfangen eines dritten Sensorsignals, das anzeigt, dass ein Blistersammelturm mit den Blisterverpackungen voll ist, und Senden eines dritten Steuersignals, um Produktion der Blisterverpackungen zu stoppen; und
Empfangen eines vierten Sensorsignals umfassend Informationen über den Gegenstand in den Blisterverpackungen in dem Speicherrohr und Speichern der Informationen.

## Revendications

1. Empileur d'emballages blisters (6) pour la réception et l'empilage d'emballages blisters (16) contenant un article, comprenant :
une première tour de collecte de blisters (14) comportant une section de stockage de tour de collecte (14b);
un ensemble nid (26) pour maintenir l'un des emballages blisters, l'ensemble nid comportant une entrée de nid pour la réception des emballages blisters à partir d'un convoyeur (8) ; et
une porte de tour pour retenir les emballages blisters dans la section de stockage de tour de collecte,
dans lequel l'ensemble nid est configuré pour insérer un emballage blister à la fois vers le haut dans un fond de la section de stockage de tour de collecte ;
dans lequel l'ensemble nid (26) peut tourner avec la section de stockage de tour de collecte et, pendant la rotation, s'élève pour insérer l'un des emballages blisters dans la section de stockage de tour de collecte.

2. Empileur selon la revendication 1, dans lequel l'ensemble nid (26), lors de la rotation, élève verticalement ledit un des emballages blisters dans la section de stockage de tour de collecte.

3. Empileur selon la revendication 2, dans lequel l'ensemble nid (26) est relié par un galet de came à une came cylindrique entraînant ladite rotation et élevant l'ensemble nid.

4. Empileur selon la revendication 1, dans lequel la porte de tour comprend une porte basculante à sa partie inférieure pour empêcher les emballages blisters de tomber une fois que les blisters ont été placés dans la section de stockage de tour de collecte (14b).

5. Empileur selon la revendication 1, comprenant en outre une deuxième tour de collecte de blisters (15), dans lequel les première et deuxième tours de collecte sont disposées sur un bras rotatif.

6. Empileur selon la revendication 5, dans lequel les première et deuxième tours de collecte de blisters (14, 15) comprennent chacune entre deux et quatre sections de stockage de tour de collecte disposées dans des quadrants séparés.

7. Empileur (6) selon la revendication 5, comprenant en outre un cylindre rotatif, dans lequel la première et la deuxième tour de collecte de blisters sont disposées aux extrémités opposées du bras rotatif et le cylindre rotatif est relié à un centre du bras rotatif.

8. Empileur (6) selon la revendication 7, dans lequel le bras rotatif fait tourner les première et deuxième tours de collecte de blisters entre une première position où les emballages blisters sont chargés dans au moins une des sections de stockage de tour de collecte et une deuxième position où une pile d'emballages blisters chargés dans ladite au moins une des sections de stockage de tour de collecte peut être déchargée.

9. Empileur (6) selon la revendication 8, comprenant en outre au moins un tube de stockage, et dans lequel les emballages blisters dans la deuxième position peuvent être déchargés dans le tube de stockage positionné au-dessus de la pile dans la section de stockage de tour de collecte.

10. Empileur (6) selon la revendication 9, comprenant en outre un magasin (42) d'agrafes pour sceller ledit au moins un tube de stockage une fois que la pile d'emballages blisters a été insérée dans le tube de stockage.

11. Empileur (6) selon la revendication 1, dans lequel la section de stockage de tour de collecte maintient une pile d'emballages blisters à des positions de contact sélectionnées sur une périphérie de chacun des emballages blisters.

12. Empileur (6) selon la revendication 1, dans lequel le nid est constitué d'un matériau en acier inoxydable.

13. Empileur (6) selon la revendication 1, dans lequel la section de stockage de tour de collecte (14b) est constituée d'un matériau en aluminium anodisé.

14. Empileur (6) selon la revendication 1, comprenant en outre un bras de poussée configuré pour pousser une pile d'emballages blisters de la section de stockage de tour de collecte dans des tubes de stockage, dans lequel le bras de poussée est relié à un vérin asservi.

15. Empileur (6) selon la revendication 1, comprenant en outre un dispositif de commande qui est configuré pour exécuter une ou plusieurs des opérations suivantes :
recevoir un premier signal de capteur indiquant que l'emballage blister est chargé dans le nid et transmettre un premier signal de commande pour faire tourner un cadran et élever le nid ;
recevoir un deuxième signal de capteur indiquant que la section de stockage de tour de collecte est complètement remplie et transmettre un deuxième signal de commande pour pousser une pile d'emballages blisters de la section de stockage de tour de collecte pleine dans un tube de stockage ;
recevoir un troisième signal de capteur indiquant qu'une tour de collecte de blisters est pleine d'emballages blisters et transmettre un troisième signal de commande pour arrêter la production des emballages blisters ; et
recevoir un quatrième signal de capteur incluant des informations sur l'article dans les emballages blisters contenus dans les tubes de stockage et stocker ces informations.
